# EUROPEAN PATENT APPLICATION

(11) **EP 1 146 729 A2**
(43) Date of publication of application: **17.10.2001**
(21) Application number: 01104099.5
(22) Date of filing: 21.02.2001
(51) Int. Cl.: H04N 5/00

(54) **Method and system for streaming media data in heterogenous environments**

(30) Priority: 15.03.2000 EP 00105507
(71) Applicant: International Business Machines Corporation, Armonk, NY 10504 (US)
(72) Inventor: Baumeister, Sascha, 70190 Stuttgart (DE); Raith, Thomas Michael, 71254 Ditzingen (DE); Feig, Ephraim, Chappaqua, NY 10514 (US)
(74) Representative: Klein, Hans-Jörg

(57) **Abstract**

The present invention discloses a new method and system for streaming media data in a heterogeneous network environment. Additionally to existing standard streaming products, e.g. standard Media Player and Stream Server, a *Stream Server Portal* which controls a set of Stream Servers is provided by the present invention. The Stream Server Portal offers a service called *prepareStreaming* to applications which returns the streaming meta data necessary to initiate streaming for given media instances. The use of Stream Server Portal allows to generate streaming meta data necessary to initiate streaming on the fly as part of executing a prepareStreaming request. This completely removes the need to store and maintain said streaming streaming meta data and solves the problems associated with it. Furthermore, Stream Server Portal allows to transfer media data to a stream server machine transparently as part of executing a prepareStreaming request. This removes the constraint of media data to be maintained on the same machine as the stream server software and solves the problems this creates for certain server platforms. The Stream Server Portal can minimize the additional network traffic by maintaining a cache of the media data already transferred. Finally, Stream Server Portal allows to choose among available stream servers (even from different makers) in order to stream a particular media as part of executing a prepareStreaming request. This removes the need for companies to decide for a proprietary stream server software, as the Stream Server Portal shields the application requiring streaming from knowing the specifics about, and from storing and maintaining streaming meta data. A preferred embodiment of the present invention discloses the use of an additional Stream Server Controller when the Stream Server Portal may choose among several Stream Server.

## Description

The present invention relates to a method and system for streaming media data by using standard streaming products in a heterogeneous network environment, especially in environments which do not support existing standard streaming products.

New media data (e.g. audio or video data) extends traditional computer data formats into more natural data formats for the interaction of humans and computers by incorporating images, motion pictures, voice, audio, and video. Leading market, business, social, and technical indicators point to the growing importance of this digitally recorded content. Latest in 2003, new media data will eclipse structured data in sheer volume. Storing, managing, rendering and integrating these digital media data into the information management system and integrating these media data seamlessly into business applications yields significant competitive advantage and the opportunity for new markets, new customers, and new services. One key characteristic of new media data is the huge variety of its size. New media data sizes can span from a few kilobytes for image data to many gigabytes for high resolution video data. Unfortunately, the comparably huge size of at least audio and video media has the drawback that unbearable latency times occur when such media is downloaded to a client to be rendered afterwards. Therefore, a technique called streaming was developed playing audio or video immediately as it is downloaded from the Internet
rather then storing it in a file on the receiving computer first. Streaming is accomplished by way of web browser plug-ins (e.g. so called Media Players), which decompress and play the media data in real time; fast computer and fast connection are required for accomplishing streaming.

Generally, streaming requires two components to interact: On one hand there must be a Stream Server which resides on a server and is responsible to read the media data and to send it through the network in parallel. On the other hand, there must be a Media Player which resides on a client and is responsible to receive the media data from the network and to render it in parallel. The way streaming technology is realized today, media players are only able to stream in conjunction with a stream server build by the same company. This either because completely proprietary wire protocols are used between the media player and the stream server, or because proprietary add-ons are used to the standard RTP/RTPS wire protocols. Also, Stream Servers are in general only able to stream media data that is stored on a hard disc of the machine running the Stream Server software. Finally, in order to initiate streaming, a file is required that contains a pointer to the media data to be streamed, the TCP/IP hostname of the stream server machine and the port the stream server software listens to. Such a file is commonly referred to as streaming meta data or *meta file*. The format of such streaming meta data is again proprietary to the kind of Stream Server used. Typical sample streaming meta data for the RealNetworks G2 server (".ram" file) looks as follows:
rtsp://9.164.184.12:200/media/videos/video1.rv
rtsp://9.164.184.12:200/media/videos/video2.rv

Streaming meta data for other stream servers could include more specific information.

The constraints above cause a couple of problems for enterprises who want to utilize streaming technology:

As the media data has to be stored on the same machine that runs a particular Stream Server software, and as each Stream Server software product is only available for some server platforms, companies cannot choose freely when deciding for a server platform anymore. For example, this means that companies who want to use the RealNetworks Stream Server/Player cannot store their media data on S/390 servers anymore, because the RealNetworks product is not available on this particular platform.

Unfortunately for S/390, RealNetworks is the market leader in the streaming business with about 90% market share and its not cost effective to port the application to the platform.

Streaming meta data has to be stored and maintained for each combination of media data and Stream Server to be used to stream this media data. As these streaming meta data contain the TCP/IP hostname of the Stream Server machine, this creates a maintenance problem once the stream server hostname changes for some reason, as now the streaming meta data affected have to be extracted from the data store and in the worst case manually altered. The same is true when media data is to be relocated to another machine for administrative reasons, as the media data contains the file name and location of the media data.

As companies tend to buy other companies from time to time, it would not be possible for a company to decide for a single strategic stream server software. This means that over time when the media of the merged companies are shared, several different streaming meta data have to be maintained for each single media, increasing the administrative costs and the architectural impact the utilization of streaming technology has.

As streaming meta data contains pointers to the media data, the referential integrity of the data store cannot be guaranteed without special architectural means in the application layer.

It is object of the present invention to reduce maintenance problems with streaming meta data.

Furthermore, it is object of the present invention to provide a streaming architecture for media data which allows a platform independent use of platform specific stream servers.

These objects have been solved by independent claims. Further preferred embodiments of the present invention are laid down in the subclaims.

These objects have been solved by introducing a *Stream Server Portal* that controls a set of stream servers known to it. The Stream Server Portal offers a service called *prepare Streaming* to applications which returns the streaming meta data necessary to initiate streaming for given media instances.

This allows said Stream Server Portal to use the Stream Servers it knows to generate the streaming meta data necessary to initiate streaming on the fly as part of executing a prepare Streaming request. This completely removes the need to store and maintain said streaming meta data and solves the problems associated with it.

This also allows said Stream Server Portal to transfer media to a Stream Server machine transparently as part of executing a prepare Streaming request. This removes the constraint of media data to be maintained on the same machine as the Stream Server Software and solves the problems this creates for certain server platforms. The Stream Server Portal can minimize the additional network traffic by maintaining a cache of the media data already transferred.

Finally, this also allows said Stream Server Portal to choose among available stream servers (even from different makers) in order to stream a particular media as part of executing a prepareStreaming request. This removes the need for companies to decide for a proprietary stream server software, as the Stream Server Portal shields the application requiring streaming from knowing the specifics about, and from storing and maintaining streaming meta data.

The present invention will be described in more detail using preferred embodiments with figures, where
- FIG 1: shows prior art streaming products
- FIG 2: shows the basic streaming architecture of the present invention
- FIG 3: shows a preferred implementation of the streaming architecture as shown in FIG 2
- FIG 4a/b: shows a floating diagram explaining the method of the present invention

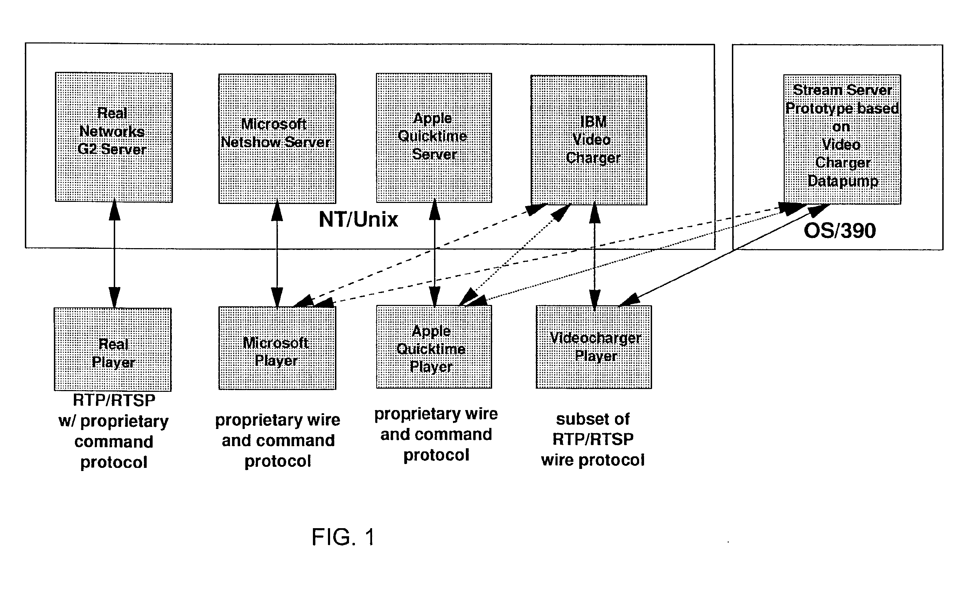

In FIG 1 prior art streaming products of different companies are shown. Each company offers its own Stream Server as well as Media Player belonging hereto. Normally Stream Servers are not compatible with Media Player developed by others.

Stream Server products are only available for certain platforms. For example, the RealNetworks Stream Server/Media Player which has a market majority is not available for the IBM S/390 platform.

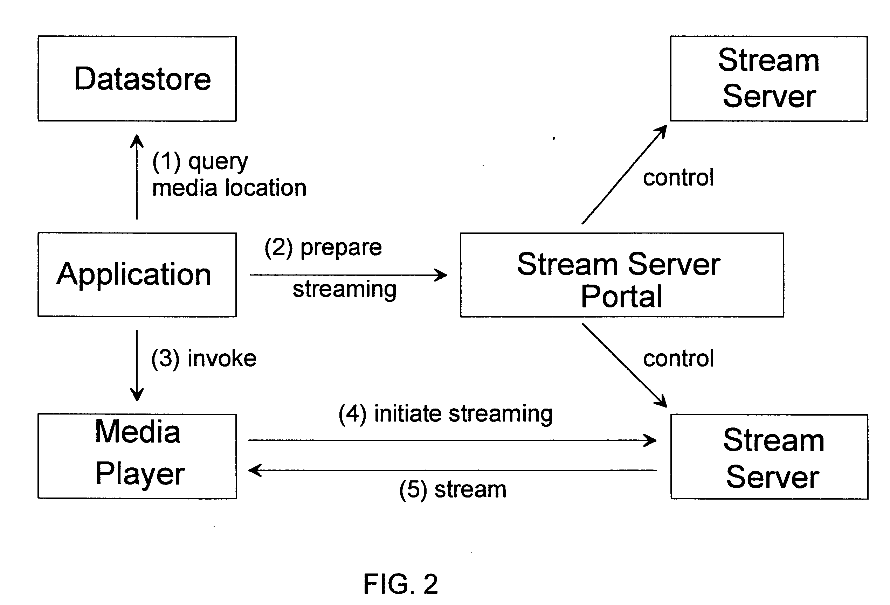

FIG 2 shows the basic architecture of the present invention. The architecture consists of a data store for storing media data, an application for accessing media data and for invoking Media Player, a Stream Server Portal for receiving calls for preparing streaming of media data, a Media Player for initiating streaming and rendering of media data and Stream Servers for executing streaming of media data. The data store may be any available standard database like IBM DB2.
Stream Server/ Media Player may be any standard streaming product as currently available on the market like
RealNetworksServer/Player, MicrosoftNetshowServer/Player, AppleQuicktime/Player, IBM Videocharger/Player.

It is an essential aspect of the present invention that neither the standard Stream Server nor the standard Media player need any adaptation for using in the present invention.

The only newly developed component in the present invention is the Stream Server Portal (Stream Server Controller). All other components are standard components.

The Stream Server Portal manages the communication between the single components of the architecture, especially receives the prepare streaming request which contains location of the media data to be streamed, selects the appropriate Stream Server if more than one available, initiates transfer of media data to be streamed to the selected Stream Server if necessary (cache), and returns the location of the media data and the selected Stream Server (streaming meta data) to the application which invokes the Media Player for initiating streaming based on the streaming meta data.

The above basic architecture uses the method steps of:
1. The application queries the location of a media, for example a URL, from a data store, for example a relational database like IBM DB2. As far as the application is part of the media player itself the query could be initiated by the media player directly. A further embodiment is that the address information of the media data is already available by the application without starting a query via a local call or remote call to a data store.
2. The application calls the prepareStreaming service of the Stream Server Portal, passing the location (address) of the media and the kind of renderer it wants to use. The Stream Server Portal decides for a Stream Server that is able to stream the media to said renderer, transfers the media to said stream server if necessary, uses the Stream Server to generate the streaming meta data needed to initiate the streaming, and returns the streaming meta data to the application.
3. The application invokes the media player, for example Real Player, and passes the streaming meta data it received from the Stream Server Portal.
4. The media player initiates the streaming with the Stream Server the Stream Server Portal chose, for example RealNetworks G2 Server.
5. The Stream Server starts to stream the media content to the media player which renders it in parallel.

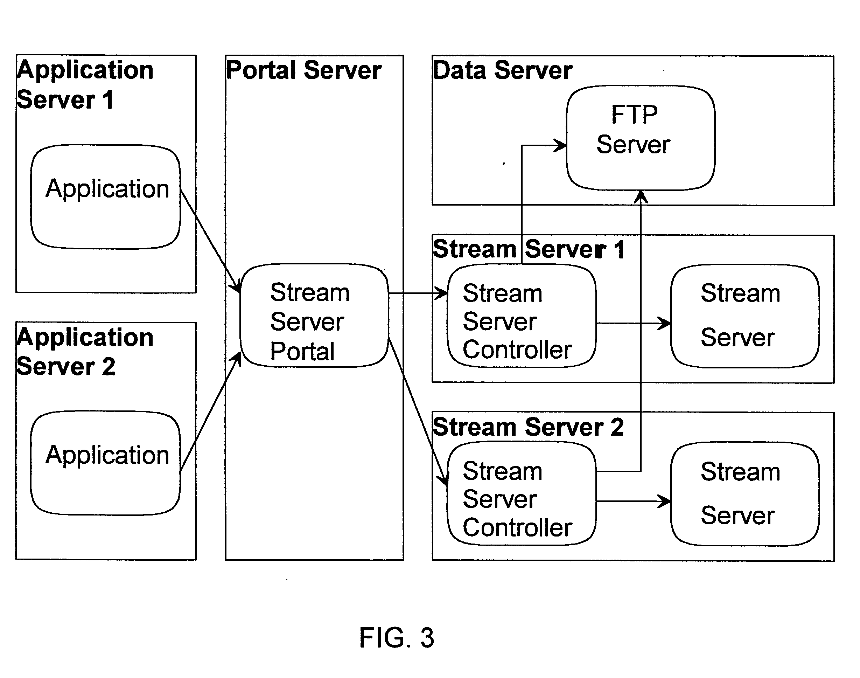

FIG 3 shows a preferred implementation of the streaming architecture as shown in FIG 2.

The most significant difference to the basic architecture of FIG 2 is that two independent Stream Servers are integrated. The integration of these two Stream Servers into the basic architecture without adapting them has been achieved by a separation of the functionality of the Stream Server Portal into two separate function components:
a Stream Server Portal
a Stream Server Controller for each Stream Server
Both components may be installed on different servers as shown in FIG 3.

Stream Server Portal component is mainly responsible to choose a suitable Stream Server Controller based on the Stream Server controller it knows. This decision can be based on the ability of the related Stream Server to stream the type of media at all, the cache content of the stream server controller, the current utilization of the associated Stream Server, the locality of the associated Stream Server to the client request etc.

Furthermore, Stream Server Portal basically offers a prepare streaming service allowing to pass the location of the media data to the Stream Server to be selected by Stream Server Portal.

Stream Server Controller is mainly responsible to check whether the media data requested by the application are currently stored in its cache. If not, the Stream Server controller initiates a file transfer of the media data from the data store to the cache of the Stream Server Controller via FTP (File Transfer Protocol). Afterwards, the stream server controller generates streaming meta data containing the information necessary to initiate streaming of the media data by program or application and returns it via Stream Server Portal to the application.

The implementation in FIG 3 shows a preferred embodiment of the Stream Server Portal in a network environment using different Stream Server. Stream Servers, media data, Stream Server Portal and the appropriate applications are stored/installed on different servers. The protocol for calling streaming service from the Stream Server Portal initiated by the application may be RMI (Remote method invocation protocol used for Java environments) or IIOP (Remote method invocation protocol used for CORBA) or RPC (Remote Procedure Protocol)or HTTP (used in the Internet environment. This applies accordingly to the communication between Stream Server Portal and the Stream Server Controllers.

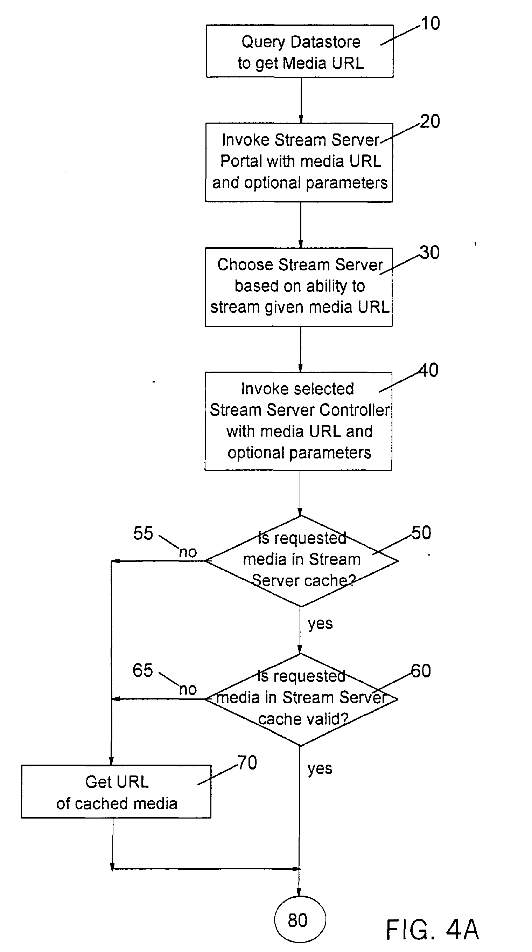

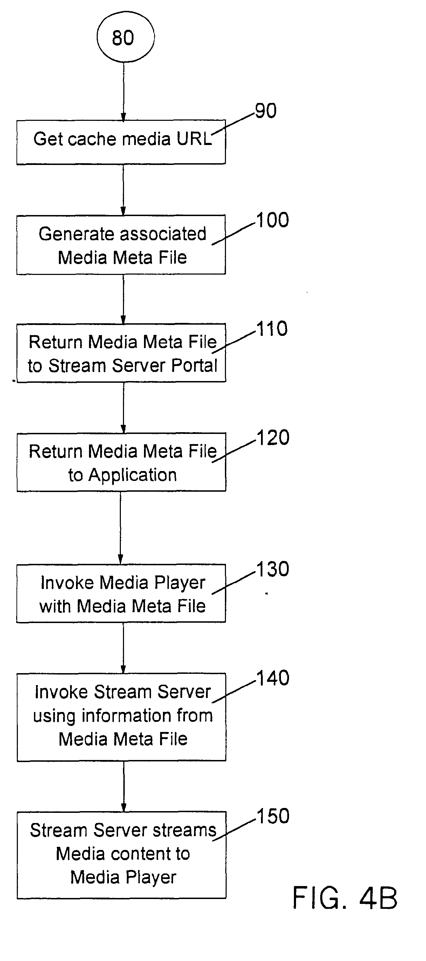

FIG 4a/b shows a floating diagram explaining the method of the present invention.

The method may be carried out by an architecture as shown in FIG 3.

It is assumed that the media data are stored in a datastore, e.g. data base like IBM DB2.

The media data may be accessed via their address information. For example the address information may be a URL (Uniform Resource Locator) when the media data is stored on an Internet server. URL is an Internet address which tells a browser where to find an Internet resource.

Normally a program or application is used to initiate a query to get the address information of the media data to be streamed (10). In this case the same programs may be used to invoke the Media Player as well as to issue the query.

After having the address information of the media data to be streamed the program or the Media Player itself invokes the Stream Server Portal and passes at least address information of the media data to the Stream Server Portal (20). Optionally, additional information like Media Player/Stream Server type, security information or client information may be passed to the Stream Server Portal.

Based on the information the Stream Server Portal receives from the program or Media Player a suitable Stream Server will be chosen (30). The Stream Server Portal invokes a Stream Server Controller related to the selected Stream Server and passes the address information of the media data and optionally additional information to it (40).

The Stream Server Controller examines whether the requested media data is already stored in the cache of the Stream Server system (Stream Server Controller system) or in a cache of network system (50). If yes, then Stream Server Controller additionally validates the media data (60) stored in the cache. Validation means that media data to be streamed and stored in the cache have the same content (Validation of data integrity). If the requested media data stored in the cache is valid that means media data stored in the datastore and media data stored in the cache are identical (80) the address information of the requested media data stored in the cache is used by the Stream Server Controller (90). To secure the integrity of media data between cache and datastore optionally the Stream Server Portal or the Stream Server Controller compares the size of the media data and the last update time stamp of both and initiates a transfer of the of the media data from the datastore to the cache if an update has been detected. In the case the cache does not contain the requested media data the Stream Server Controller initiates a FTP (File Transfer Protocol) using the address information and optionally security information received from the Stream Server Portal for transferring the requested media data from the datastore to the cache of the Stream Server Controller system or to a other storage media accessable by the Stream Server Controller. This applies accordingly when the requested media data stored in the cache is not valid (65).

After having the cache address information of media data (90) Stream Server Controller generates streaming meta data (100) which contains at least the cache address information of the media data and address of the Stream Server selected by the Stream Server Portal and returns the streaming meta data (110) via the Stream Server Portal (120) to the program or application. In the case there is no application or program available or the program or application is part of the Media Player the streaming meta data will be returned to Media Player directly.

The program or application invokes the Media Player with the streaming meta data received from the Stream Server Controller (130). Then, the Media Player invokes the Stream Server by using information of the streaming meta data (140).

The Stream Server streams the media data to the Media Player in a manner as disclosed by the prior art streaming systems (150).

The inventive Stream Server Portal is useful for every kind of software that utilizes streaming in an enterprise environment. Examples for the kinds of applications which could utilize the Stream Server Portal:

Applications utilizing streaming in a centric programming model, sample Java Servlets and CICS/IMS OLTP transactions Applications utilizing streaming in a distributed programming model, for example Java Applets Business Objects modeling media, for example Business Applications utilizing Java Enterprise Media Beans Business in categories like ERP (Enterprise Resource Planning) or SCM (Supply Chain Management), with the need to integrate streaming technology.

## Claims

1. Method for streaming media data by a streaming system which contains at least a Stream Server resided on a server system for reading and sending media data in parallel to a Media Player, Media Player resided on a client system for receiving and rendering media data in parallel and a Stream Server Portal for preparing streaming, whereby media data is stored in a datastore, comprising at least the steps of:
receiving address information of the media data to be streamed by said Stream Server Portal (10)
selecting suitable Stream Server for said Media Player by said Stream Server Portal (30)
initiating transfer of said media data from said datastore to a server system on which said Stream Server selected by said Stream Server Portal is installed (55)
generating streaming meta data containing at least address information of said media data stored in said Server system selected by said Stream Server Portal and address information of said Stream Server (100)
passing said streaming meta data to said Media Player directly or indirectly (110, 120, 130)

2. Method according to claim 1 wherein said address information of the media data to be streamed is provided by an application or program or by said Media Player (10).

3. Method according to claim 1 wherein said address information additionally includes information relating the type of said Media Player/Stream Server and/or security information and/or client system information (10).

4. Method according to claim 1 wherein said Stream Server Portal selects a suitable Stream Server based on the address information provided by said application (30).

5. Method according to claim 1 wherein said step for initiating transfer of said media data from said data store to said Stream Server selected by said Stream Server Portal is only accomplished if the media data to be streamed is not already stored on a storage media of said Stream Server selected by said Stream Server Portal (50).

6. Method according to claim 5 wherein said step for initiating transfer of said media data from said data store to said Stream Server selected by said Stream Server Portal is not accomplished if the media data to be streamed are stored on said storage media of said Stream Server selected by said Stream Server Portal and the data integrity between of said media stored on said storage media and said datastore is given (80).

7. Method according to claim 6 wherein any update of said media data of said datastore stored in said storage media of said Stream Server initiates a file transfer of said updated media data from said datastore to said storage media of said Stream Server (60).

8. Method according to claim 1 wherein said streaming meta data is passed from said Stream Server via said Stream Server Portal to said application or program (110, 120).

9. Method according to claim 1 wherein said streaming meta data is passed from said Streamer Server to said Media Player directly.

10. Method according to claim 1 wherein said storage media is a cache.

11. Method according to claim 1 wherein said step for initiating transfer of said media data is accomplished by a an additional separate Stream Server Controller allocated to each Stream Server whereby said Stream Server Controller and said Stream Server are installed on the same server system.

12. Method according to claim 11 wherein said step for generating said streaming meta data is accomplished by said separate Stream Server Controller.

13. Method according to claim 11 wherein said step for generating said streaming meta data is accomplished by said Stream Server.

14. Method according to claim 1 wherein transfer of said media data is carried out via FTP (File Transfer Protocol) (50).

15. Method according to claim 1 wherein said datastore is installed on a server system different from said Stream Server system.

16. Method according to claim 1 wherein said Media Player initiates streaming of said media data from said Stream Server by using said information contained in said streaming meta data (140).

17. System for streaming media data comprising at least following components:
a Stream Server for reading and sending media data in parallel to a Media Player
a Media Player for receiving and rendering said media data in parallel
a Stream Server Portal for receiving at least address information of media data to be streamed and choosing a suitable Stream Server for Media Player to be selected
a Stream Server Controller for initiating transfer of said media data from said datastore to said server system where said Stream Server is installed and for generating a streaming meta data containing at least address information of said media data stored in said Stream Server system and address information of said Stream Server selected by said Stream Server Portal.

18. System according to claim 17 wherein said Stream erver, said Stream Server Controller, said Media Player, said datastore containing media data and said Stream Server Portal are installed on different servers and the communication between said servers is accomplished via remote calls.

19. System according to claim 17 wherein said system further includes an application for gathering address information of media data to be streamed and for passing said address information to said Stream Server Portal.

20. System according to claim 17 wherein each of said server system includes a cache for storing media data.

21. Streamer Server Portal for use in a method according to claim 1 comprises at least following components:
a function component for receiving at least address information for media data to be streamed
a function component for choosing a suitable Stream Server for Media Player to be selected.

22. Stream Server Controller for use in a method according to claim 1 to 16 comprising at least following components:
a function component for initiating transfer of said media data from said datastore to said server system where said Stream Server is installed
a function component for generating streaming meta data and transmitting said streaming meta data to said Media Player indirectly or directly.

23. Stream Server Controller according to claim 22 further comprising:
a function component for checking whether said media data to be streamed already stored in said storage media of said Stream Server
a function component for detecting updates of said media data to be streamed in said datastore and initiating a file transfer of said updated media data from said datastore to said storage media of said Stream Server.

24. Computer program product stored in the internal memory of a digital computer, containing parts of software code to execute the method in accordance with 1 to 15 when said program product is running on said computer.
